# EUROPÄISCHE PATENTSCHRIFT

(11) **EP 2 480 804 B1**
(45) Veröffentlichungstag und Bekanntmachung des Hinweises auf die Patenterteilung: **16.10.2013**
(21) Anmeldenummer: 10741972.3
(22) Anmeldetag: 12.08.2010
(51) Int. Cl.: F16H 63/30, F16H 63/32

(54) **SCHALTELEMENT FÜR EIN KRAFTFAHRZEUGGETRIEBE**
SHIFT ELEMENT FOR A MOTOR VEHICLE TRANSMISSION
ORGANE DE CHANGEMENT DE VITESSES POUR UNE BOITE DE VITESSES D'UN VEHICULE A MOTEUR

(30) Priorität: 24.09.2009 DE 102009042944
(43) Veröffentlichungstag der Anmeldung: 01.08.2012
(73) Patentinhaber: Schaeffler Technologies AG & Co. KG, 91074 Herzogenaurach (DE)
(72) Erfinder: KRÄMER, Klaus, 91438 Lenkersheim (DE); LÖFFELMANN, Jochen, 91330 Eggolsheim (DE); HAJEK, Verena, 91085 Weisendorf (DE)
(86) Internationale Anmeldenummer: PCT/EP2010/061731
(87) Internationale Veröffentlichungsnummer: WO 2011/035980

(56) Entgegenhaltungen:
- EP-A1- 1 757 845
- DE-A1-102006 004 933
- DE-A1-102007 030 216
- JP-A- 2004 197 843

## Beschreibung

### Gebiet der Erfindung

Die Erfindung betrifft ein Schaltelement für ein Kraftfahrzeuggetriebe, umfassend ein Anbindeteil mit einem Mittel zur Anbringung an eine Schaltstange, und ein Eingriffteil zum Eingriff mit einer Schaltkomponente.

### Hintergrund der Erfindung

Ein Schaltelement der eingangs genannten Art ist beispielsweise in der DE 101 25 098 A1 offenbart. Die DE 101 25 098 A1 zeigt eine Schaltgabel für ein Wechselgetriebe mit einem Grundköper und einem als Schaltarm ausgebildeten Schaltelement. Der Schaltarm ist über ein versteifendes Formteil an den Grundkörper der Schaltgabel angebunden. Der Grundkörper ist in der Querebene der Schaltgabel gabelförmig ausgebildet und bildet ein durch die Gabelenden begrenztes Schaltmaul, welches beispielsweise mit einer Schiebemuffe wechselwirkt. Das Formteil, der Grundkörper und der Schaltarm sind vorzugsweise separat aus Stahlblech gefertigt, wobei die Dicke des Bleches der einzelnen Bauteile voneinander unterschiedlich sein kann. Der Schaltarm ist in der DE 101 25 098 A1 an dem Formteil durch Schweißen befestigt.

Weitere Schaltelemente sind in DE 10 2007 030 216 A1, die ein Schaltelement nach dem Oberbegriff des Anspruchs 1 zeigt, EP 1 757 845 A1 und DE 10 2006 004 933 A1 offenbart.

### Aufgabe der Erfindung

Es ist eine Aufgabe der Erfindung, ein Schaltelement der eingangs genannten Art anzugeben, welches bei einem möglichst einfachen Fertigungsprozess vielfältig eingesetzt werden kann und den hohen Belastungen während des Betriebs standhält.

### Lösung der Aufgabe

Die genannte Aufgabe wird erfindungsgemäß gelöst durch ein Schaltelement mit der Merkmalskombination gemäß Anspruch 1.

Demnach umfasst das Schaltelement für ein Kraftfahrzeuggetriebe ein Anbindeteil mit einem Mittel zur Anbringung an eine Schaltstange, und ein Eingriffteil zum Eingriff mit einer Schaltkomponente. Hierbei ist vorgesehen, dass das Anbindeteil und das Eingriffteil ineinander gesteckt und miteinander verstemmt sind.

Unter einem Eingriffteil sind hierbei alle die Teile zu verstehen, die zeitweise oder ständig formschlüssig in Eingriff mit einer Schaltkomponente stehen. Derartige Teile weisen beispielsweise Nuten, Finger, Mäuler oder Ausnehmungen auf und wechselwirken mit Gabeln, Hebeln, Bestandteilen von Schaltwippen, Schalffingern oder Hebeln mit Kugelköpfen, die der Schaltkomponente zugeordnet sind. Dabei können die genannten Teile sowohl dem Eingriffteil als auch der Schaltkomponente zugeordnet sein.

Die Erfindung geht in einem ersten Schritt von der Überlegung aus, dass ein Schaltelement aufgrund der hohen Belastungen, denen es insbesondere in einem Getriebe ausgesetzt ist, aus einem stabilen und formbeständigen Material gefertigt sein muss. Um diesen Belastungen standhalten zu können, wird ein Schaltelement bislang üblicherweise aus metallischen Werkstoffen, wie zum Beispiel Stahlblechen hergestellt. Die Schaltelemente werden dabei mittels gängiger Verfahren, wie einem Schweißverfahren oder einem Feinstanzen gefertigt.

In einem zweiten Schritt erkennt die Erfindung, dass die bislang von der Fachwelt verwendeten Schaltelemente aufgrund des verwendeten stabilen Materials zwar die Bedingungen an die Festigkeit erfüllen, dass allerdings aufgrund der Herstellungsverfahren die Schaltelemente notwendigerweise einen Grundkörper mit gleichbleibender Dicke aufweisen. Eine derartige Ausgestaltung führt jedoch häufig zu Problemen bei der Auslegung. Weiterhin ergibt sich aufgrund der oft komplizierten Grundform eines Schaltelements teilweise viel Verschnitt des Materials, so dass die Kosten im Herstellungsprozess unnötig hoch beziffert werden müssen.

In einem Dritten Schritt erkennt die Erfindung, dass sich dieses Problem durch ein Schaltelement beheben lässt, welches aus einem separaten Anbindeteil und einem separaten Eingriffteil gefertigt ist, wobei beide Teile ineinander gesteckt und miteinander verstemmt sind. Durch eine derartige Ausgestaltung des Schaltelements kann das Material der einzelnen Bauteile, also des Eingriffteils und des Anbindeteils, den Anforderungen entsprechend gewählt werden. Durch das Verstemmen der ineinandergesteckten Teile wird eine sichere und nicht lösbare Verbindung hergestellt. Das Schaltelement bietet insbesondere die Möglichkeit, die Materialdicke im Bereich des Eingriffsteils und des Anbindeteils unabhängig voneinander zu wählen und aufgrund dessen keine Kompromisse bei der Dicke des Materials eingehen zu müssen. Somit kann insbesondere das Eingriffteil, welches höheren Belastungen standhalten muss, aus einem dickeren Material gefertigt sein, als das Anbindeteil. Weiterhin ist von Vorteil, dass auch die Materialpaarung aufgrund der verstemmten Verbindung des Anbindeteils mit dem Eingriffteil frei gewählt werden kann. Die Bauteile sind insbesondere ohne weitere Befestigungsmittel direkt ineinander gesteckt und durch Stemmen gefügt.

Insgesamt bietet sich also durch ein derartiges Schaltelement überraschenderweise die Möglichkeit, ein Schaltelement unter Erhalt der Belastbarkeit kostengünstiger als bislang zu gestalten. Durch die bei zwei separaten Bauteilen erhöhte Flexibilität wird es auch möglich, das Schaltelement an gestellte Anforderungen, wie beispielsweise Kundenwünsche, leichter anzupassen. Beispielsweise muss bei einem geänderten Anbindeteil nicht das gesamte Schaltelement vorgehalten werden. Es genügt die Vorhaltung oder entsprechende Neugestaltung des Anbindeteils, wohingegen das Eingriffteil insbesondere unverändert beibehalten kann. Insgesamt wird somit die Gleichteilverwendung erhöht. Die Eingriffteile können oftmals beibehalten werden. Dadurch verringern sich die Transportkosten. Auch kann eine Härtung der nun als Gleichteile ausgeführten Eingriffsteile einfacher und kostengünstiger durchgeführt werden.

Als Schaltelement sind in Abhängigkeit der Anwendung verschiedene Möglichkeiten der Ausführung denkbar. Beispielsweise kann das Schaltelement als eine Schaltgabel oder auch als ein Schaltarm ausgebildet sein. Eine Schaltgabel hat beispielsweise die Aufgabe, die axiale Bewegung einer Schaltstange auf eine sogenannte Schiebemuffe zu übertragen. Ein Schaltarm dient insbesondere der Übertragung von Schaltbewegungen innerhalb eines Getriebes. Hierzu greift beispielsweise ein Schaltfinger in das Schaltmaul des Eingriffteils ein.

Das Schaltelement umfasst vorliegend ein Anbindeteil mit einem Mittel zur Anbringung an eine Schaltstange. Das Anbindeteil kann beispielsweise an dem Grundkörper eines weiteren Schaltelements befestigt sein. Diese Anbindung kann entweder direkt oder über ein Formteil ausgestaltet sein. Das Anbindeteil kann aus verschiedenen Materialen bestehen, wie beispielsweise aus korrosions- und hitzebeständigen Metallen oder Kunststoffen. Die jeweilige Materialwahl kann insbesondere in Abhängigkeit des Einsatzes des Schaltelementes getroffen werden.

Das Mittel zur Anbringung dient der Befestigung oder Anbindung des Anbindeteils an eine Schaltstange oder Schaltwelle. Hierzu kann das Mittel zur Anbringung als ein Formteil ausgestaltet sein, welches beispielsweise zusätzliche Ösen, Führungsaugen oder sonstige Verbindungsteile zur Anbindung aufweist. Insbesondere kann das Mittel zur Anbringung auch als ein integraler Bestandteil des Anbindeteils direkt mit diesem verbunden sein.

Weiterhin ist das Schaltelement mit einem Eingriffteil zum Eingriff mit einer Schaltkomponente ausgebildet. Das Eingriffteil kann beispielsweise derart ausgebildet sein, dass es zum Eingriff einer als ein Schaltfinger ausgebildeten Schaltkomponente zum Durchführen eines Schaltvorgangs in einem Getriebe dient, wodurch eine als Schaltgabel ausgestaltete Schaltkomponente verschoben werden kann. Das Eingriffteil kann in unterschiedlicher Geometrie ausgebildet sein. Insbesondere bietet sich eine Ausgestaltung an, bei der ein Schaltmaul zwischen zwei konturierten Schenkeln ausgebildet ist, die beispielsweise u-förmig angeordnet sind. Hierdurch wird ein mechanisch gewollter, exakter Eingriff einer Schaltkomponente ermöglicht. In das Schaltmaul kann dann beispielsweise ein Schaltfinger zum axialen Verschieben oder Verdrehen einer dem Anbindeteil angeschlossenen Schaltstange eingreifen.

Durch die verstemmte Steckverbindung zwischen dem Anbindeteil und dem Eingriffteil wird eine sicherere Verbindung gewährleistet, die sich insbesondere auch in der Wirkungsrichtung während des Einsatzes nicht löst.

Das Verstemmen der beiden Teile miteinander bietet eine zusätzliche Sicherung der Verbindung. Eine verstemmte Verbindung ist eine kraft- und formschlüssige Verbindung zwischen zwei einzelnen Bauteilen durch eine plastische Verformung wenigstens eines Bauteils. Hierbei verkeilen sich die Bauteile unlösbar ineinander. Zum Verstemmen eignen sich insbesondere Materialien, die sich plastisch verformen lassen, wie beispielsweise Kunststoffe oder metallische Werkstoffe.

Eine verstemmte Verbindung kann durch eine Kraftaufwendung auf die beiden zu fügenden Bauteile zum Beispiel durch eine Presse oder einen Hammer erreicht werden, der das Anbindeteil und das Eingriffteil durch die auf die beiden Bauteile wirkende Kräfte miteinander verbindet. Im Gegensatz zu einer materialschlüssigen Verbindung durch einen Schweißprozess lassen sich mittels Verstemmen auch Werkstoffe zusammenfügen, die aufgrund ihrer Stoffeigenschaften nicht verschweißt werden können. Für das Eingriffteil und das Anbindeteil können somit auch Materialen eingesetzt werden, die sich beispielsweise aufgrund ihrer Verschleißbeständigkeit oder ihrer sonstiger spezifischer Eigenschaften gut eignen, die aber beispielsweise durch ein Schweißverfahren nicht verbunden werden können.

Durch die Fertigung als separate Bauteile ist die Dicke des Anbindeteils und des Eingriffteils jeweils frei wählbar, so dass man keine Kompromisse bei der Wahl der Dicke, insbesondere bei der Blechdicke, machen muss.

Da das Eingriffteil häufig symmetrisch gefertigt ist, entsteht beim Härten eines nun massiver gefertigten Eingriffteils weniger Verzug als bislang.

Das Anbindeteil und das Eingriffteil sind in einer Z-Richtung senkrecht zur Längs- oder Fügerichtung mit einer Anzahl von Steckabschnitten ineinander gesteckt, wobei sich hierbei einzelne Steckabschnitte entlang der Längsrichtung und in einer der Querrichtung senkrecht zur Längsrichtung. Durch Hintergriff können die beiden Bauteile in der Z-Richtung leicht zusammengesteckt, jedoch in Längs- oder Fügerichtung nach dem Steckvorgang nicht mehr auseinandergezogen werden. Durch einen anschließenden Stauchvorgang werden die Teile dann endgültig material- und formschlüssig gefügt, so dass insgesamt eine unlösbare Verbindung hergestellt ist. Insbesondere können die Steckabschnitte puzzleartig ineinander gefügt sein.

Die Steckabschnitte des Anbindeteils und des Eingriffteils sind durch eine Krafteinwirkung in einer Z-Richtung senkrecht zur Längsrichtung und senkrecht zur Querrichtung miteinander verstaucht. Durch diese Verstauchung wird die zuvor beschriebene Steckverbindung in Quer- und Längsrichtung durch Materialfluss verstärkt. Nach einem losen Ineinanderstecken wird durch ein derartiges Verstauchen die Verbindung zwischen dem Anbindeteil und dem Eingriffteil material- und stoffschlüssig gefestigt, wodurch sich die Belastbarkeit des Schaltelements erhöht. Das Anbindeteil und das Eingriffteil sind fest miteinander verstemmt.

Vorteilhafterweise weist das Eingriffteil sich in Längsrichtung erstreckende konturierte Schenkel auf, zwischen denen ein sich in Längsrichtung öffnendes Schaltmaul ausgebildet ist. Die Schenkel des Eingriffteils begrenzen und/oder definieren durch ihre Form und Ausgestaltung das Schaltmaul. Das Schaltmaul kann mit schrägen, runden oder geraden Abschnitten oder mit Vor- und Rücksprüngen, insbesondere symmetrisch begrenzt sein. Auf diese Weise ist ein definierter Eingriff beispielsweise mittels eines Schaltfingers zum axialen Verschieben einer Schaltstange ausgebildet.

Zweckmäßigerweise sind das Anbindeteil und das Eingriffteil in Z-Richtung in unterschiedlichen Dicken gefertigt. Hierbei kann beispielsweise das Eingriffteil aus einem dickeren Material gefertigt sein, so dass es den Anforderungen, denen es beispielsweise durch den Eingriff eines Schaltfingers in das Schaltmaul ausgesetzt ist, sicher standhalten kann. Insgesamt kann somit das Eingriffteil bei niedrigeren Kosten des gesamten Schaltelements massiver ausgebildet werden, als dies bei dem bislang notwendigen Kompromiss einer einheitlichen Dicke der Fall war.

In einer besonders vorteilhaften Ausgestaltung der Erfindung sind das Anbindeteil und das Eingriffteil aus unterschiedlichen Materialien gefertigt. Beispielsweise können unterschiedliche metallische Werkstoffe verwendet werden oder auch Stähle mit hohem Kohlenstoffanteil, wodurch die gewünschte Härte eines Bauteils erhöht ist. Möglich sind theoretisch auch hochfeste und hitzebeständige Kunststoffe. Durch eine derart flexible Ausgestaltung können ebenfalls besonders gut Kundenwünsche berücksichtigt werden. Insbesondere ermöglicht der Einsatz verschiedener Materialien den Einsatz des jeweils best geeignetsten Materials für das Eingriffteil zum einen und für das Anbindeteil zum anderen. Es muss nicht auf ein einheitliches Gesamtmaterial für das Schaltelement insgesamt zurückgegriffen werden, welches stets im Hinblick auf Kosten und mechanische Eigenschaften einen Kompromiss darstellen würde.

Um das Schaltelement an einer Schaltstange anbringen zu können, ist das Mittel zur Anbringung des Anbindeteils an die Schaltstange in einer vorteilhaften Ausgestaltung als ein Formteil mit zwei Führungsösen ausgebildet, die einander gegenüberliegend angeordnet sind und sich im Wesentlichen in Z-Richtung erstrecken. Die Führungsösen sind hierbei in einer vorteilhaften Ausgestaltung in ihrem Innendurchmesser derart dimensioniert, dass die Schaltstange in den Führungsösen in Querrichtung verschiebbar gelagert ist. Zur Betätigung eines Schaltvorgangs wird hierbei das Schaltelement entlang der Schaltstange verschoben. Auch ist es möglich, die Schaltstange in den Führungsösen fest mit dem Schaltelement zu verbinden. In diesem Fall wird die Schaltstange bei einer Bewegung des Schaltelements mit bewegt, beispielsweise verschoben oder gedreht.

Vorteilhafterweise ist das Schaltelement als ein sich in einer Längsrichtung erstreckender Schaltarm ausgebildet. Ein solcher Schaltarm dient der Übertragung von Schaltbewegungen in einem Getriebe und kann beispielsweise an einer Schaltwelle oder an einer Schaltgabel angeordnet sein. Bei Ausgestaltung des Schaltelements als ein Schaltarm greift insbesondere ein Schaltfinger in das Schaltmaul ein. Die Bewegungen des Schaltfingers werden dadurch beispielsweise auf eine Schaltstange und/oder auf eine Schaltgabel übertragen.

Vorteilhafterweise ist das Anbindeteil an einer Schaltgabel anbringbar. Schaltgabeln sind in vielfältiger Form und Ausführung bekannt. Sie dienen ebenfalls zur Umsetzung der Schaltvorgänge in einem Getriebe, wobei die Schaltgabeln mit entsprechenden Schiebemuffen zusammenwirken und beispielsweise an Schaltschienen angeordnet sind. Die Verbindung kann entweder direkt oder auch über ein Formteil geschehen.

### Kurze Beschreibung der Zeichnung

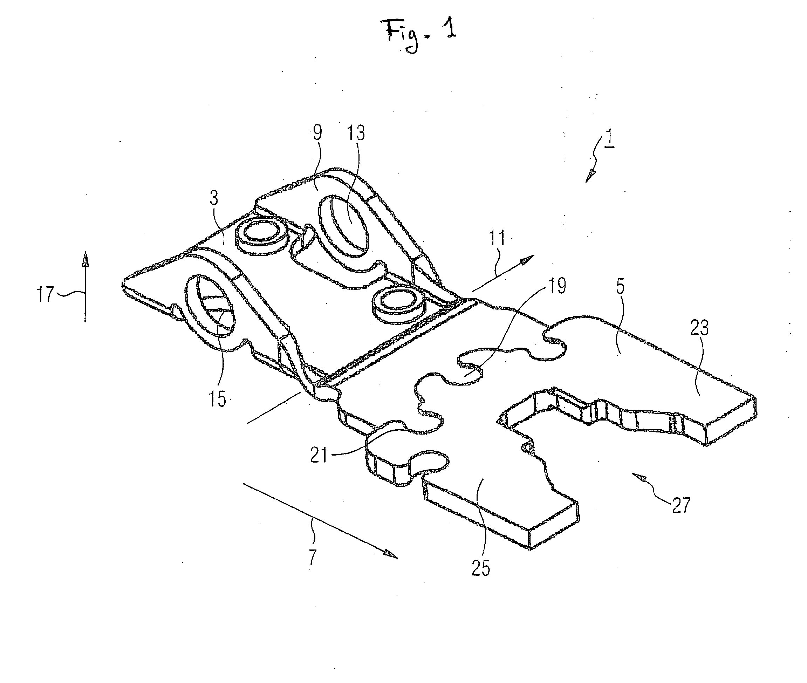

Im Folgenden wird ein Ausführungsbeispiel der Erfindung anhand einer Zeichnung näher erläutert. Dabei zeigt die einzige Fig. 1 ein als Schaltarm ausgebildetes Schaltelement, welches aus einem Anbindeteil und einem Eingriffteil besteht, die miteinander verstemmt sind.

### Ausführliche Beschreibung der Zeichnung

Fig. 1 zeigt ein Schaltelement 1 mit einem Anbindeteil 3 und einem Eingriffteil 5, die als separate Bauteile jeweils aus einem Blech gefertigt sind. Durch eine separate Fertigung kann zum einen die Blechdicke unterschiedlich gewählt werden, so dass man keine Kompromisse bei der Fertigung der Bauteile machen muss. Zum Anderen bietet sich die Möglichkeit, die Materialpaarung des Anbindeteils 3 und des Eingriffteils 5 frei zu wählen.

Das Schaltelement 1 ist vorliegend als ein sich in der Längsrichtung 7 erstreckender Schaltarm ausgebildet. Der Schaltarm dient der Übertragung von Schaltbewegungen in einem in Fig. 1 nicht gezeigten Getriebe.

Das Anbindeteil 3 ist mit einem Mittel 9 zur Anbringung des Anbindeteils 3 an eine in Fig. 1 nicht gezeigte Schaltstange ausgebildet. Das Mittel 9 zur Anbringung ist vorliegend als ein Formteil mit zwei sich entlang einer Querrichtung 11 gegenüberliegenden Führungsösen 13, 15 ausgestaltet. Die Führungsösen 13, 15 erstrecken sich in einer Z-Richtung 17 aus der Ebene des Anbindeteils 3 hinaus. In den Führungsösen 13, 15 kann eine in der Fig. 1 nicht gezeigte Schaltstange in Querrichtung 11 verschiebbar gelagert werden.

Das Anbindeteil 3 und das Eingriffteil 5 sind aus metallischen Werkstoffen unterschiedlicher Dicke gefertigt. Die Dicke des Eingriffteils 5 in Z-Richtung ist stärker, als die Dicke des Anbindeteils 3. Durch die unterschiedliche Dicke sind die Bauteile den an sie gestellten Anforderungen angepasst. Das Anbindeteil 3 und das Eingriffteil 5 ist aus einem Blech der jeweiligen Dicke gestanzt. Die Führungsösen 13, 15 des Anbindeteils 3 sind anschließend aufgebogen. Das Eingriffteil 5 ist nach dem Stanzvorgang gehärtet.

Das Anbindeteil 3 und das Eingriffteil 5 weisen jeweils Steckabschnitte 19, 21 auf, die in Z-Richtung 17 ineinandergesteckt sind und die beiden Bauteile 3, 5 miteinander verbinden. Hierbei hintergreifen einzelne Steckabschnitte 21 des Eingriffteils 5 die Steckabschnitte 19 des Anbindeteils 3 entlang der Längsrichtung 7 in Querrichtung 11, und umgekehrt. Die Steckabschnitte 19, 21 sind in etwa nach der Form von Puzzleteilen ausgestaltet. Durch die gegebenen Ausgestaltung der Steckabschnitt 19,21 ist nach dem Ineinanderstecken der Teile 3 und 5 ein Auseinanderziehen in Längsrichtung 7 nicht möglich.

Zusätzlich sind das Anbindeteil 3 und das Eingriffteil 5 zu einer sicheren Befestigung durch eine Krafteinwirkung in Z-Richtung 17 miteinander verstemmt. Durch das Verstemmen wird eine kraft- und formschlüssige Verbindung zwischen dem Anbindeteil 3 und dem Eingriffteil 5 gewährleistet. Durch die Krafteinwirkung in Z-Richtung 17 kommt es zu einem Materialfluß in Längsrichtung 7 und in Querrichtung 11. Hierdurch werden die Bauteils unlösbar und dauerhaft miteinander verbunden. Weiterhin bietet sich durch eine verstemmte Verbindung die Möglichkeit, die Bauteile auch dann miteinander zu verbinden, wenn sie aus nicht-schweißbaren Materialien gefertigt sind.

Das Eingriffteil 5 ist mit zwei sich in Längsrichtung 7 erstreckenden Schenkeln 23, 25 ausgebildet, die einander gegenüberliegend ausgebildet sind. Durch die Schenkel 23, 25 wird ein Schaltmaul 27 eingeschlossen, welches durch die Form der Schenkel 23, 25 in seiner Form definiert ist. Das Schaltmaul 27 dient für den Eingriff eines in Fig. 1 nicht gezeigten Schaltfingers. Schaltfinger haben die Funktion der Kraftübertragung beispielsweise von einem äußeren Schalthebel auf eine Schaltgabel in Getrieben. Dabei kann der Schaltfinger in das Schaltmaul 27 eingreifen und überträgt beispielsweise eine axiale Bewegung auf eine Schaltgabel. Hierdurch wird der Schaltvorgang in einem Getriebe durchgeführt.

### Liste der Bezugszahlen

- 1: Schaltelement
- 3: Anbindeteil
- 5: Eirigriffteil
- 7: Längsachse
- 9: Formteil
- 11: Querachse
- 13: Führungsöse
- 15: Führungsöse
- 17: Z-Achse
- 19: Steckabschnitte
- 21: Steckabschnitte
- 23: Schenkel
- 25: Schenkel
- 27: Schaltmaul

## Patentansprüche

1. Schaltelement (1) für ein Kraftfahrzeuggetriebe, umfassend ein Anbindeteil (3) mit einem Mittel zur Anbringung (9) an eine Schaltstange, und ein Eingriffteil (5) zum Eingriff mit einer Schaltkomponente, wobei das Anbindeteil (3) und das Eingriffteil (5) ineinander gesteckt und miteinander verstemmt sind, **dadurch gekennzeichnet, dass** das Anbindeteil (3) und das Eingriffteil (5) in einer Z-Richtung (17) senkrecht zu einer Längsrichtung (7) des Schaltelementes (1) mit einer Anzahl von Steckabschnitten (19, 21) ineinander gesteckt sind, dass sich einzelne Steckabschnitte (19, 21) entlang der Längsrichtung (7) in einer Querrichtung (11) senkrecht zur Längsrichtung (7) hintergreifen und dass die Steckabschnitte (19, 21) des Anbindeteils (3) und des Eingriffteils (5) durch eine Krafteinwirkung in Z-Richtung (17) miteinander verstaucht sind.

2. Schaltelement (1) nach Anspruch 1, **dadurch gekennzeichnet, dass** das Eingriffteil (5) sich im Wesentlichen in Längsrichtung (7) erstreckende konturierte Schenkel (23, 25) aufweist, zwischen denen ein sich in Längsrichtung (7) öffnendes Schaltmaul (27) gebildet ist.

3. Schaltelement (1) nach einem der vorhergehenden Ansprüche, **dadurch gekennzeichnet, dass** das Anbindeteil (3) und das Eingriffteil (5) in Z-Richtung (17) in unterschiedlichen Dicken gefertigt sind.

4. Schaltelement (1) nach einem der vorhergehenden Ansprüche, **dadurch gekennzeichnet, dass** das Anbindeteil (3) und das Eingriffteil (5) aus unterschiedlichen Materialien gefertigt sind.

5. Schaltelement nach einem der vorhergehenden Ansprüche, **dadurch gekennzeichnet, dass** das Mittel zur Anbringung (9) des Anbindeteils (3) an eine Schaltstange als ein Formteil mit zwei Führungsösen (13, 15) ausgebildet ist, die in Querrichtung (11) einander gegenüberliegend angeordnet sind und sich im Wesentlichen in Z-Richtung (17) erstrecken.

6. Schaltelement (1) nach einem der vorhergehenden Ansprüche, **dadurch gekennzeichnet, dass** das Anbindeteil (3) und das Eingriffteil (5) als ein Schaltarm ausgebildet sind.

7. Schaltelement (1) nach einem der vorhergehenden Ansprüche, **dadurch gekennzeichnet, dass** das Anbindeteil (3) an eine Schaltgabel anbringbar ist.

## Claims

1. Shift element (1) for a motor vehicle transmission, comprising a tie-up part (3) with a means for attachment (9) to a shift rod, and an engagement part (5) for engagement with a shift component, the tie-up part (3) and the engagement part (5) being plugged one into the other and being caulked with one another, **characterized in that** the tie-up part (3) and the engagement part (5) are plugged one into the other in a Z-direction (17) perpendicular to a longitudinal direction (7) of the shift element (1) by means of a number of plug portions (19, 21), **in that** individual plug portions (19, 21) engage along the longitudinal direction (7) one behind the other in a transverse direction (11) perpendicular to the longitudinal direction (7), and **in that** the plug portions (19, 21) of the tie-up part (3) and of the engagement part (5) are compressed together as a result of the action of force in the Z-direction (17).

2. Shift element (1) according to Claim 1, **characterized in that** the engagement part (5) has contoured legs (23, 25) which extend essentially in the longitudinal direction (7) and between which a shift jaw (27) opening in the longitudinal direction (7) is formed.

3. Shift element (1) according to one of the preceding claims, **characterized in that** the tie-up part (3) and the engagement part (5) are manufactured in different thicknesses in the Z-direction (17).

4. Shift element (1) according to one of the preceding claims, **characterized in that** the tie-up part (3) and the engagement part (5) are manufactured from different materials.

5. Shift element according to one of the preceding claims, **characterized in that** the means for attachment (9) of the tie-up part (3) to a shift rod is designed as a moulding with two guide lugs (13, 15) which are arranged opposite one another in the transverse direction (11) and extend essentially in the Z-direction (17).

6. Shift element (1) according to one of the preceding claims, **characterized in that** the tie-up part (3) and the engagement part (5) are designed as a shift arm.

7. Shift element (1) according to one of the preceding claims, **characterized in that** the tie-up part (3) is attachable to a shift fork.

## Revendications

1. Organe de changement de vitesses (1) pour une boîte de vitesses d'un véhicule automobile, comprenant une partie de liaison (3) avec un moyen pour le montage (9) sur une tige de changement de vitesses, et une partie d'engagement (5) pour l'engagement avec un composant de changement de vitesses, la partie de liaison (3) et la partie d'engagement (5) étant enfichées l'une dans l'autre et matées l'une avec l'autre, **caractérisé en ce que** la partie de liaison (3) et la partie d'engagement (5) sont enfichées l'une dans l'autre dans une direction Z (17) perpendiculairement à une direction longitudinale (7) de l'organe de changement de vitesses (1) avec une pluralité de portions d'enfichage (19, 21), **en ce que** des portions d'enfichage (19, 21) individuelles viennent en prise par l'arrière le long de la direction longitudinale (7) dans une direction transversale (11) perpendiculairement à la direction longitudinale (7) et **en ce que** les portions d'enfichage (19, 21) de la partie de liaison (3) et de la partie d'engagement (5) sont engagées les unes dans les autres par torsion par application de force dans la direction Z (17).

2. Organe de changement de vitesses (1) selon la revendication 1, **caractérisé en ce que** la partie d'engagement (5) présente des branches (23, 25) profilées s'étendant essentiellement dans la direction longitudinale (7), entre lesquelles est formée une mâchoire de changement de vitesses (27) s'ouvrant dans la direction longitudinale (7).

3. Organe de changement de vitesses (1) selon l'une quelconque des revendications précédentes, **caractérisé en ce que** la partie de liaison (3) et la partie d'engagement (5) sont fabriquées avec des épaisseurs différentes dans la direction Z (17).

4. Organe de changement de vitesses (1) selon l'une quelconque des revendications précédentes, **caractérisé en ce que** la partie de liaison (3) et la partie d'engagement (5) sont fabriquées en des matériaux différents.

5. Organe de changement de vitesses selon l'une quelconque des revendications précédentes, **caractérisé en ce que** le moyen pour le montage (9) de la partie de liaison (3) sur une tige de changement de vitesses est réaliste sous forme de pièce moulée avec deux oeillets de guidage (13, 15) qui sont disposés en regard l'un de l'autre dans la direction transversale (11) et qui s'étendent essentiellement dans la direction Z (17).

6. Organe de changement de vitesses (1) selon l'une quelconque des revendications précédentes, **caractérisé en ce que** la partie de liaison (3) et la partie d'engagement (5) sont réalisées sous forme d'un bras de changement de vitesses.

7. Organe de changement de vitesses (1) selon l'une quelconque des revendications précédentes, **caractérisé en ce que** la partie de liaison (3) peut être montée sur une fourchette de changement de vitesses.
